# EUROPEAN PATENT SPECIFICATION

(11) **EP 2 064 082 B1**
(45) Date of publication and mention of the grant of the patent: **15.12.2010**
(21) Application number: 07803184.6
(22) Date of filing: 04.09.2007
(51) Int. Cl.: B60K 15/035, F16K 24/04

(54) **VALVE FOR THE VENTING CIRCUIT OF A LIQUID TANK**
VENTIL FÜR DIE BELÜFTUNGSSCHALTUNG EINES FLÜSSIGKEITSTANKS
SOUPAPE POUR CIRCUIT DE MISE À L'AIR LIBRE D'UN RESERVOIR DE LIQUIDE

(30) Priority: 04.09.2006 FR 0607722
(43) Date of publication of application: 03.06.2009
(73) Proprietor: Inergy Automotive Systems Research (Société Anonyme), 1120 Bruxelles (BE)
(72) Inventor: ARNALSTEEN, Michel, B-1702 Groot-Bijgaarden (BE); CUVELIER, Vincent, B-1030 Bruxelles (BE); ROUXEL, Thierry, F-53210 Argentre (FR)
(74) Representative: Jacques, Philippe
(86) International application number: PCT/EP2007/059199
(87) International publication number: WO 2008/028894

(56) References cited:
- US-A- 5 234 013
- US-A- 5 566 705
- US-A- 5 960 816
- US-A1- 2004 238 033

## Description

The present invention relates to a valve for the venting circuit of a liquid tank, in particular a fuel tank with which a motor vehicle may be equipped.

Liquid tanks, in particular fuel tanks for motor vehicles, are nowadays generally provided *inter alia* with a venting circuit. This circuit allows air to be introduced into the tank in the event of underpressure (especially for compensating for the volume of liquid consumed) or allows the gases contained in the tank to be removed in the event of overpressure (especially in the event of overheating). This circuit also allows the channelling and possible filtering of the gases that have to be discharged into the atmosphere, for the purpose of meeting the ever stricter environmental requirements in this regard.

The venting circuit includes, in a known manner, at least one valve that prevents, as far as possible, liquid from the tank being expelled in the event of the tank being turned upside down or at an excessively high tilt angle. This venting valve must provide a rapid and reliable response when its operating conditions arise, but with minimal sensitivity to transient phenomena such as in particular very high flow rates, overpressure in the tank or low-amplitude waves. It must also ensure that there is minimal liquid carried over into the canister (or the chamber containing a substance, usually activated carbon, which adsorbs the fuel vapours) in normal operation and when filling, for fear of saturating said canister and making the decontamination of the gases discharged into the atmosphere ineffective. This phenomenon is generally called LCO (Liquid Carry Over) in the jargon of the field.

US 5,566,705 describes a valve according to the preamble of claim 1.

Many venting valves employ a float having an upper needle or tip which closes off an aperture for connecting the tank to the venting circuit. One way of reducing the risk of LCO with this type of valve is that described in Application PCT/EP2006/062479 in the name of the Applicant, the content of which is incorporated by reference in the present application, and which consists in providing the valve with baffles (preferably, at least one internal and one external baffle) so as to create a chicane or tortuous path for the vapour stream. For this purpose the baffles and the chamber of the valve are provided with openings in their upper part and preferably the openings of the internal and external baffles are aligned and arranged crosswise relative to those of the main chamber. This geometry prevents direct flow between the various partitions and therefore creates an optimal labyrinth effect.

The Applicant has, however, observed that the droplets carried by the gas stream come to rest on the float precisely because of the very sinuous route of the stream and because they have greater inertia than air or the fuel vapours. These droplets coalesce on the lateral surface of the float and make a wetted surface thereon. As the gas stream passes in proximity to (even touches) this surface, the risk of seeing these droplets being re-conveyed by the stream through the sealing aperture is great. It should be noted that this problem is also present, but to a lesser extent, in valves without baffles/chicanes.

The object of the present invention is therefore to solve this problem by adapting the geometry of the float so as to stop the droplets and ensure that the surface wetted by them is no longer touched by the gas stream.

For this purpose, the invention relates to a valve that makes it possible to convey, to a venting circuit of a liquid tank, vapour streams generated in this tank above the liquid, said valve comprising:
a) a chamber comprising a lateral wall and a cover and which is connected by a ventilation aperture in its cover to the venting circuit, and by one or more apertures in its lateral wall to the inside of the tank; and
b) a float comprising a body and a head provided with a needle capable of closing off the ventilation aperture, said float being able to slide vertically inside the chamber depending on the level of liquid therein,
the head of the float having a lateral surface provided with a baffle and the internal geometry of the chamber and the head being such that the vapour streams from the tank come to impact on this baffle before going through the ventilation aperture.

The principle at the heart of the invention is to create a type of barrier to the flow of the gas stream entering into the ventilation line, the object of which is to trap the possible droplets carried by this stream and to avert the stream from the wetted surface of the float so that this stream does not sweep over this surface and carry off the droplets that might coalesce on it.

The valve according to the invention is intended for the venting circuit of a tank, which may contain any liquid. In particular, the liquid may be a fuel, a brake fluid or a lubricant. More particularly, the liquid is a fuel. The tank may be intended for any use, especially for equipping a vehicle and more especially for equipping a motor vehicle.

The valve according to the invention comprises a float composed of a body and a head provided with a needle intended for closing off the ventilation aperture. It also comprises a main chamber of any shape, internally adapted to the sliding of the float, and in particular of the body of the float. For this purpose, it usually has a constant internal cross section, at least in the part where the body of the float has to be able to slide. In particular, at least in this part, the chamber is internally cylindrical.

The external (lateral) shape of the body of the float is obviously matched to that of the inside of the chamber in which it has to be able to slide. Therefore in general it has a cylindrical external shape.

The valve according to the invention also preferably comprises a secondary chamber, open via the bottom inside the main chamber and forming a baffle as described in the aforementioned Application PCT/EP2006/062479. In this variant, preferably, the head of the float has a size and geometry such that it can slide into the secondary chamber, while the body of the float cannot do so. In one particular variant, the main chamber and the secondary chamber are both cylindrical and concentric. In this variant, the body and the head of the float then also have a cylindrical external shell, the diameters of the main chamber (D_{MC}), of the float body (D_{FB}), the secondary chamber (D_{SC}) and the float head (D_{FH}) then being related by the following relationship: D_{MC}>D_{FB}>D_{SC}>D_{FH}.

The main chamber of the valve according to the invention preferably includes a support for the float when the latter is in the low position. The support for the float may be of any known type. Advantageously, it is an apertured plate or apertured frustoconical dish. The term "apertured" is understood to mean having several openings that allow liquid to flow through the dish in order to allow the float to fulfil its function. In particular, the frustoconical dish or the plate include a central aperture. When the liquid level rises in the tank, this liquid penetrates the valve via the lower part, through the openings in the frustoconical dish or the plate, forces the float upwards and also causes the needle to close off the aperture located in the head of the valve.

The main chamber of the valve according to the invention has, preferably in its upper part, one or more lateral openings for flow of the gases, and therefore providing the degassing/venting function of the valve. The term "gas" is understood in particular to mean the external air that has to be introduced into the tank or the gas mixtures contained in the tank, the removal of which has to be possible. In the case of a fuel tank, these gas mixtures comprise essentially air, and fuel vapour.

Advantageously, the lateral openings in the main chamber are small in size, so as to prevent the flow of substantial volumes of liquid, in particular by throttling. Each opening typically has an area between 10 and 20 mm². There is therefore generally a total area between 20 and 40 mm² since a configuration having two diametrically opposed windows is preferred.

In particular, the lateral openings have an elongate rectangular cross section. Advantageously, there are at least two of these openings. This is because a single window could be blocked (by liquid fuel) at the moment when the valve reopens, for example when the tank is tilted. In this case, the risk of liquid fuel being carried over is very high, since the pressure has risen in the tank and, upon reopening, the gas flow rate is high. Complete blockage is avoided with at least two diametrically opposed apertures.

In one advantageous variant of the valve according to the invention, the internal baffle is also provided with at least two lateral openings. This is because the liquid that is stopped by the baffle flows along the latter in order to drain downwards. Therefore, if the gas stream can get past the baffle only via the bottom, it will again sweep over the droplets and therefore carry them over.

More particularly preferably, these openings are offset with respect to those of the main chamber. The variant according to which the openings in the internal baffle are also diametrically opposed, and staggered with those of the chamber (i.e. the four openings are arranged crosswise, at 90° to one another), gives good results.

The aforementioned openings in the internal baffle may be located anywhere on it. However, slots starting from the bottom of this baffle give good results because they help in the settling (draining) of the trapped liquid. These slots may even be present over more than half of the height of the baffle, or even more than ¾ of this height.

Positioning gas flow openings in the upper part of the chamber very substantially reduces the possible impact on these openings of the liquid level and of its movements, thus allowing venting in certain critical situations. This impact may also, when required, be reduced by the use of at least one external baffle placed facing some of the openings and preferably all of them.

This may be a single baffle having a substantially annular cross section, surrounding the head of the valve. Or alternatively, it is possible to use a succession of baffles, each facing one or more openings. Preferably, it is a single baffle, preferably one that is annular and provided with openings. This is because, preferably, the valve according to the invention has a very high closure height (i.e. close to the upper wall of the tank) in order to use the storage volume of the tank to the maximum. This means that a passage for the gases is provided sufficiently high up on the valve. However, the presence of the external baffle has the effect of lowering the uppermost entry point into the valve. To reconcile the use of this baffle with a high closure height, openings are made in this baffle. Thus, when the fuel level is very high, there is still a small passage through the slots of the baffles in order for venting of the tank to continue. Preferably, these openings are in the form of vertical slots, preferably starting from the bottom of the external baffle, and this being for the same reasons as those mentioned for the openings in the internal baffle.

As for the internal baffle, the external baffle preferably comprises at least two diametrically opposed openings, preferably offset with those of the chamber and in particular staggered with respect to them.

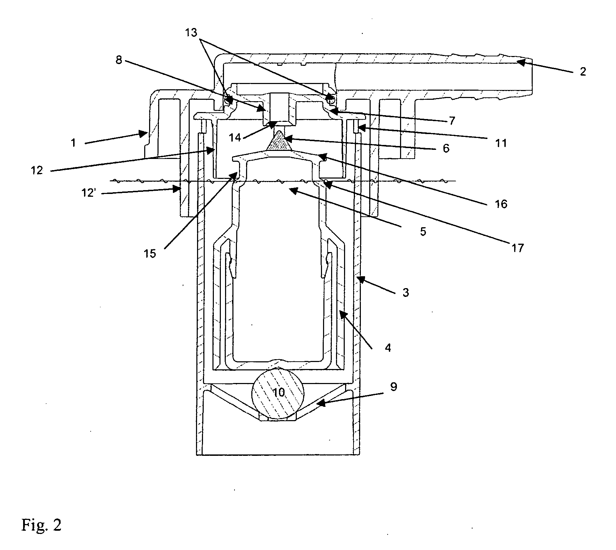

It follows from the foregoing that in one advantageous variant of the valve according to the invention, the openings of the internal and external baffles are arranged crosswise with respect to those of the main chamber. This geometry, illustrated by the appended Figure 2, prevents direct flow between the various partitions and therefore creates an optimal labyrinth effect.

The head of the float according to the invention is provided with a baffle and the internal geometry of the chamber and the head of the float are such that the vapour streams from the tank come to impact on this baffle before going through the ventilation aperture. Preferably, this impact takes place just before the streams pass through the aperture, in the last part of their flow path. This is because, generally, the vapour streams moving from the tank to the venting circuit via the ventilation aperture (or "gas stream") have a change of direction before their final route to said aperture. In the case of a valve with an internal baffle, generally, the gas stream is descending and becomes ascending by passing under the low point of the baffle (i.e. under its lower end). And in the case of a valve without an internal baffle, the gas stream generally enters into the chamber substantially horizontally through the lateral apertures of this, then becomes ascending to reach the ventilation orifice. In both cases, the float of the valve according to the invention comprises a baffle located on the head of the float, above the point where the gas stream changes direction and, from descending or horizontal, becomes ascending.

The term "baffle" is understood to mean any excrescence of the lateral wall of the float head capable of stopping the droplets of liquid carried by the gas stream while allowing the gas stream to pass at a certain distance from the wetted surface under this float. It may be a continuous excrescence present over the whole lateral circumference of the float (i.e. an annular-shaped excrescence). Alternatively, it may be several baffles spread, preferably evenly, over this circumference. A continuous annular excrescence is very suitable. It may have any cross section, preferably tapered at its end. It preferably extends at least I mm, even 1.5 mm outside the shell of the float, but preferably not more than 3 mm, or even 2 mm. It may be located anywhere on the float head, but preferably in the highest possible position. A baffle located directly on the needle (and therefore in a way extending the upper surface of the head of the float) gives good results.

Preferably, the float of the valve according to the invention comprises a groove hollowed out in the lateral surface of the head of the float, the upper wall of which forms the baffle according to the invention and the bottom (lateral wall) forms the wetted surface from which the vapour streams are distanced. The term "groove" is in fact understood to mean a hollow relief delimited by a lateral wall and at least one upper wall which sticks out "horizontally" with respect to this (i.e. if the float is lit up by a light source positioned vertically above it, this wall projects a shadow over the lateral surface of the groove). By comparing a float having a smooth head with a float having a head provided with a groove as defined above, the liquid carry over (or LCO) measured is two to three times larger.

In this variant, the bottom of the groove may run straight on from the rest of the lateral surface of the float head, or be recessed with respect to it, the latter variant being preferred. If it is recessed, this is generally by a maximum of 2 mm, or even 1.5 mm. In this case, the groove also comprises a lower wall.

The horizontal walls of the groove, where appropriate, are preferably not identical. This is because they do not have the same role:
- The object of the upper wall is to stop the droplets, and is for this purpose preferably substantially horizontal, so as to be perpendicular to the flow path. The upper baffle specifically acts as the impact baffle according to the invention.
- The lower wall is itself preferably substantially oblique (and describes, for example, an angle of 30 to 60° with the horizontal) to enable the droplets spread over the lateral wall to be gradually removed by gravity and to prevent the retention of liquid fuel.
It therefore acts in a way as a drainage surface, and for this purpose may be provided with "vertical" drainage channels or drains, as the bottom of the groove moreover. It should be noted that this is not necessarily vertical but may be oblique or curved. The same applies moreover for the lateral surface of the float.

It should also be noted that in the case of a float provided with a single baffle and not with a groove, the lateral surface of the float located below this baffle is also advantageously provided with drainage channels. In summary: it is advantageous, within the scope of the invention, to provide the lateral wall of the float located just below the impact baffle with vertical drainage channels.

The valve according to the invention allows a liquid tank to be vented, both in normal operation and when filling. It does not have, as such, the function of preventing ingress of liquid in the event of a vehicle rolling over or being excessively tilted (ROV or Roll-Over Valve function). This function must therefore, where appropriate, be provided by independent devices or by additional means combined with the valve.

To provide this function, the means generally employed consist of a heavy ball and/or a preloaded spring. A heavy ball gives good results, in particular in combination with an apertured frustoconical dish (or perforated plate in combination with a float having a concave frustoconical bottom). In the event of the tank being inclined, this ball moves in the frustoconical dish, drives the float upwards and causes the venting aperture to be closed off even before the liquid level rises in the valve, thus completely preventing liquid from flowing into the venting circuit. In the event of the tank rolling over, the ball of heavy material also pushes the float towards the closed position of the valve and, through gravity, keeps it in this position. The present invention gives particularly good results within the context of valves with an ROV function.

The constituent elements of the valve may be made of any material. Preferably, they are based on a thermoplastic. In this case, it is obviously convenient to choose the material or materials in such a way that they withstand the operating stresses. Of course, the materials chosen must be inert with respect to the liquids with which they have to be in contact, in particular inert with respect to fuels.

In particular in the case in which the liquid tank is a fuel tank made of plastic, most of the constituent elements of the valve according to the invention are also made of plastic. The term "plastic" is understood to mean any polymeric synthetic material, whether thermoplastic or thermosetting, which is in the solid state under ambient conditions, as well as blends of at least two of these materials. The intended polymers comprise both homopolymers and copolymers (especially binary or ternary copolymers). Examples of such copolymers are, non-limitingly: random copolymers, linear block copolymers, non-linear block copolymers, and graft copolymers. Thermoplastic polymers, including thermoplastic elastomers, and blends thereof are preferred.

Any type of thermoplastic polymer or copolymer, the melting point of which is below the decomposition temperature, is suitable. Synthetic thermoplastics having a melting range spread over at least 10 degrees Celsius are particularly suitable. Examples of such materials include those that exhibit polydispersion in their molecular weight.

In particular, the valve according to the invention may be made of polyolefins, grafted polyolefins, thermoplastic polyesters, polyketones, polyamides and copolymers thereof.

One polymer often used in plastic fuel tanks is polyethylene, in particular high-density polyethylene (HDPE) possibly in a multilayer structure including a barrier layer (for example based on EVOH, or hydrolysed ethylene/vinyl acetate copolymer) or one with a surface treatment (fluorination or sulphonation for example) for the purpose of making it impermeable to the fuels for which it is intended. Consequently, when the valve according to the invention includes a cover, this is preferably based on HDPE, so as also to be welded to the tank. As for the other parts of the valve, these are preferably based on at least one hydrocarbon-impermeable plastic. Examples of such hydrocarbon-impermeable plastics are, non-limitingly: polyethylene terephthalate or polybutylene terephthalate, polyamides, polyketones and polyacetals. It should be noted that all these parts, the cover included, may be multilayer structures, comprising, for example, at least one high-density polyethylene layer and optionally a hydrocarbon barrier layer (on the surface or within said structures).

In the case of a plastic fuel tank, and in particular one based on HDPE, good results have been obtained with valves, including a cover, based on HDPE, (so as to be able to be welded to the wall of the tank and in particular, to the perimeter of an opening in it), and a chamber and a float made of POM (polyoxymethylene) or PBT (polybutylene terephthalate).

The present invention also relates to a process that makes it possible to reduce the LCO into a ventilation circuit of a liquid tank, and in particular of a fuel tank According to the invention, this process consists in providing a ventilation aperture of the tank leading into this circuit with a float valve as described previously.

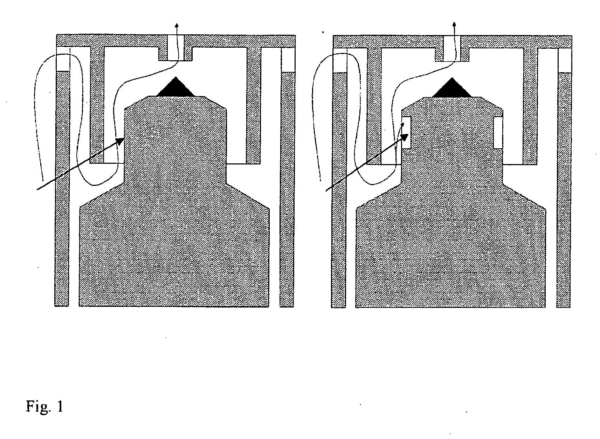

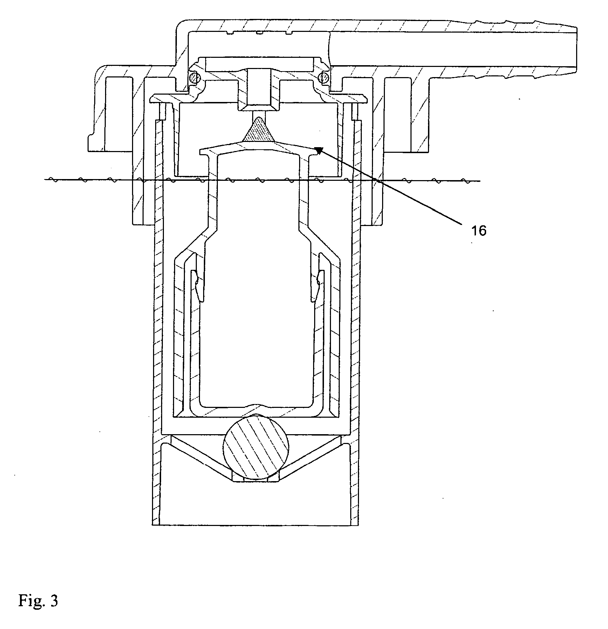

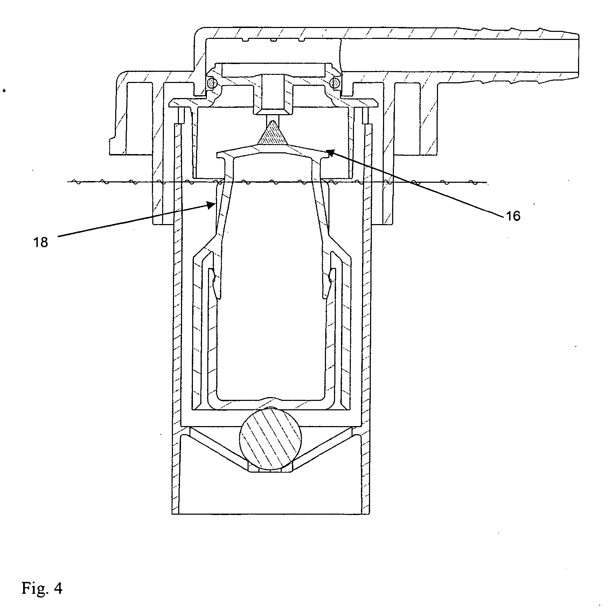

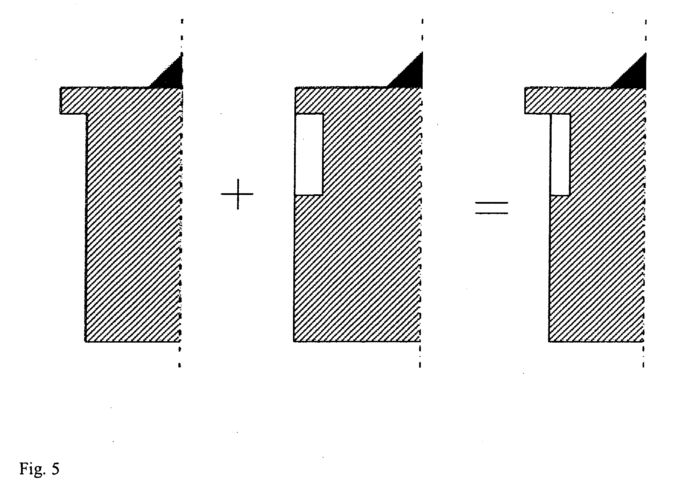

The invention is illustrated non-limitingly by the appended Figures 1 to 5, where:
■ Figure 1 shows a diagram of the principle of a valve according to the prior art (on the left) and a valve according to the invention (on the right);
■ Figure 2 shows an axial cross section through a venting valve according to the invention, in the open position and having a groove of particular geometry;
■ Figure 3 also shows an axial cross section through a venting valve according to the invention, in the open position but comprising a single deflector baffle instead of a groove;
■ Figure 4 shows an axial cross section through another valve according to the invention, also in the open position and provided with a baffle, but in addition having vertical drainage channels underneath this baffle; and
■ Figure 5 shows a diagram of the principle of a particular baffle/groove geometry of the valve according to the invention.

In Figure 1 it can be seen that:
Without the presence of the groove (prior art, left-hand figure) the droplets carried by the stream (represented by a thin arrow) come into contact with the float because of the very sinuous path of the stream and because they have greater inertia than air. These droplets coalesce on the lateral surface of the float and form a wetted surface (indicated by an arrow in bold). As the stream passes in proximity to this surface, the risk of seeing these droplets being re-conveyed by the stream through the sealing aperture is great.

With the groove, the inertia of the droplets makes them strike the bottom of the groove, or even the upper horizontal part of it. The droplets are therefore stopped by this groove while allowing the stream to pass at a certain distance from the wetted surface (the bottom of the groove).

In the absence of a groove, the LCO measured is two to three times larger.

In Figure 2, a valve is illustrated that has a coupling (1) integrating a venting tube (2); a chamber (3) which leads inside the tank (not shown); and a float shown in the bottom position. This float comprises a body (4), a head (5) produced as one part with the body (4) and provided with a needle (6). The waterline of the float is indicated by way of illustration.

The chamber (3) comprises a cover (7) provided with a chimney (8) extending downwards into the chamber and bearing the ventilation aperture (14). The float can be made to move by the rise of the liquid in the valve through an apertured plate (9) or, in the case of the tank being inclined, by displacement of an ROV ball (10) of heavy material. The chamber (3) includes, in its upper part, small lateral openings (11) allowing the gases to flow but preventing substantial volumes of liquid from flowing. The chamber also includes an internal baffle (12) of annular shape, for the purpose of stopping any liquid entrained by the gases through the openings (11). It should be noted that the coupling (1) is extended downwards by an annular part (12'), also acting as a baffle, but externally. The internal and external baffles are also provided with openings (11') (11", not shown in this figure).

In the valve illustrated, the coupling (1) is produced as one part with the external baffle (12'), the internal baffle (12) being itself produced as one part with the cover (7) and then assembled by clipping into the chamber (3), the assembly then being clipped into the coupling (1). An annular seal (13) enables this connection to be made leaktight.

This valve has an optimized position of the openings respectively in the chamber (3) and in the baffles (12) (12'), the openings (11", 11 and 11') being offset by 90° respectively, going from the outer baffle (12') to the inner baffle (12) passing via the main chamber (3).

According to one variant of the invention, the head of the float comprises a groove (15), the upper part (16) of which forms a baffle and is substantially horizontal, and the lower part (17) of which is curved so as to facilitate drainage of the bottom of the groove (15).

Figure 3 illustrates a similar valve, but of which the geometry of the float head (5) has been simplified. It comprises a single baffle (16) in the path of the gas stream.

As regards the valve illustrated in Figure 4, its float head has a geometry intermediate between that of a baffle and a groove, and in fact comprises a single baffle (16) and a subjacent lateral surface provided with vertical drainage channels (18).

Finally, Figure 5 illustrates (in the right-hand section) another advantageous variant of the float head geometry resulting from the combination of a prominent baffle (left-hand section) and a recessed groove (middle section).

## Claims

1. Valve allowing a liquid tank to be vented, both in normal operation and when filling, i.e. making it possible to convey, to a venting circuit of said liquid tank, vapour streams generated in this tank above the liquid in the event of overpressure, said valve comprising:
a) a chamber (3) comprising a lateral wall and a cover (7), wherein the chamber can be connected by a ventilation aperture (14) in its cover (7) to the venting circuit, and by one or more apertures (11) in its lateral wall to the inside of the tank; and
b) a float comprising a body (4) and a head (5) provided with a needle (6) capable of closing the ventilation aperture (14), said float being able to slide vertically inside the chamber (3) depending on the level of liquid therein, and
the head (5) of the float having a lateral surface provided with a baffle (16), the internal geometry of the chamber (3) and the head (5) being such that the droplets carried by the vapour streams from the tank come to impact on said baffle (16) before these streams go through the ventilation aperture (14), the valve being **characterized in that** the float body (4) comprises a groove (15) in its lateral surface, the upper part of this groove acting as an impact baffle (16) and the lower part (17) as a drainage surface.

2. Valve according to the preceding claim, in which the baffle (16) is located above a point where the vapour streams change direction to start a final route to the ventilation aperture (14).

3. Valve according to the preceding claim, **characterized in that** the chamber (3) comprises an internal baffle (12).

4. Valve according to Claim 2, **characterized in that** the vapour streams enter into the chamber substantially horizontally through the lateral apertures (11) of this, then become vertical to reach the ventilation orifice (14).

5. Valve according to any one of the preceding claims, in which the groove (15) has a substantially horizontal upper wall (16) and a substantially oblique lower wall (17).

6. Valve according to any one of the preceding claims, **characterized in that** the lateral wall of the float located underneath the impact baffle (16) comprises vertical drainage channels (18).

7. Valve according to any one of the preceding claims, **characterized in that** it is equipped with a heavy ball which gives it an ROV (roll-over valve) function.

8. Venting circuit of a fuel tank equipped with a valve according to any one of the preceding claims.

9. Fuel tank provided with a venting circuit according to the preceding claim or having a ventilation aperture provided with a valve according to any one of Claims 1 to 7.

## Patentansprüche

1. Ventil, das die Entlüftung eines Flüssigkeitsbehälters sowohl bei Normalbetrieb als auch beim Füllen gestattet, das heißt ermöglicht, in diesem Behälter bei einem Überdruck über der Flüssigkeit erzeugte Dampfströme zu einem Entlüftungskreislauf des Flüssigkeitsbehälters zu befördern, wobei das Ventil Folgendes umfasst :
a) eine Kammer (3), die eine Seitewand und eine Abdeckung (7) umfasst, wobei die Kammer durch eine Entlüftungsöffnung (14) in ihrer Abdeckung (7) mit dem Entlüftungskreislauf und durch eine oder mehrere Öffnungen (11) in ihrer Seitenwand mit dem Inneren des Behälters verbunden sein kann; und
b) einen Schwimmer, der einen Körper (4) und einen Kopf (5) umfasst, der mit einer Nadel (6) versehen ist, die die Entlüftungsöffnung (14) schließen kann, wobei der Schwimmer in Abhängigkeit von dem Flüssigkeitsfüllstand darin vertikal in der Kammer (3) gleiten kann, und
wobei der Kopf (5) des Schwimmers eine mit einer Prallfläche (16) versehene Seitenfläche aufweist, wobei die Innengeometrie der Kammer (3) und des Kopfs (5) derart ist, dass die von den Dampfströmen aus dem Behälter mitgeführten Tröpfchen auf die Prallfläche (16) aufprallen, bevor diese Ströme durch die Entlüftungsöffnung (14) strömen, wobei das Ventil **dadurch gekennzeichnet ist, dass** der Schwimmerkörper (4) eine Nut (15) in seiner Seitenfläche umfasst, wobei der obere Teil dieser Nut als eine Aufprallfläche (16) und der untere Teil (17) als eine Ablauffläche wirkt.

2. Ventil nach dem vorhergehenden Anspruch, wobei die Prallfläche (16) über einer Stelle positioniert ist, an der die Dampfströme ihre Richtung ändern, um eine Endroute zu der Entlüftungsöffnung (14) zu beginnen.

3. Ventil nach dem vorhergehenden Anspruch, **dadurch gekennzeichnet, dass** die Kammer (3) eine innere Prallfläche (12) umfasst.

4. Ventil nach Anspruch 2, **dadurch gekennzeichnet, dass** die Dampfströme im Wesentlichen horizontal durch die Seitenöffnungen (11) der Kammer in diese eintreten, dann vertikal verlaufen, um die Entlüftungsöffnung (14) zu erreichen.

5. Ventil nach einem der vorhergehenden Ansprüche, wobei die Nut (15) eine im Wesentlichen horizontale obere Wand (16) und eine im Wesentlichen schräge untere Wand (17) aufweist.

6. Ventil nach einem der vorhergehenden Ansprüche, **dadurch gekennzeichnet, dass** die Seitenwand des Schwimmers, die unterhalb der Aufprallfläche (16) positioniert ist, vertikale Ablaufkanäle (18) umfasst.

7. Ventil nach einem der vorhergehenden Ansprüche, **dadurch gekennzeichnet, dass** es mit einer schweren Kugel versehen ist, die eine Überrollventilfunktion ergibt.

8. Entlüftungskreislauf für einen Kraftstoffbehälter, der mit einem Ventil nach einem der vorhergehenden Ansprüche versehen ist.

9. Kraftstoffbehälter, der mit einem Entlüftungskreislauf nach dem vorhergehenden Anspruch versehen ist oder eine Entlüftungsöffnung aufweist, die mit einem Ventil nach einem der Ansprüche 1 bis 7 versehen ist.

## Revendications

1. Clapet permettant de ventiler un réservoir à liquide à la fois durant son fonctionnement normal et lors de son remplissage c.à.d. permettant d'amener vers un circuit de mise à l'air d'un réservoir à liquide, des flux de vapeurs générées dans ce réservoir au dessus du liquide en cas de surpression, ledit clapet comprenant :
a) une enceinte (3) comprenant une paroi latérale et un couvercle (7) et dans lequel la chambre (3) est reliée par un orifice de ventilation (14) dans son couvercle (7), au circuit de mise à l'air et par un ou plusieurs orifices (11) dans sa paroi latérale, à l'intérieur du réservoir ;
b) un flotteur comprenant un corps (4) et une tête (5) munie d'un pointeau (6) susceptible d'obturer l'orifice de ventilation (14), ledit flotteur pouvant coulisser verticalement à l'intérieur de l'enceinte (3) en fonction du niveau de liquide dans celle-ci ; et
la tête (5) du flotteur ayant une surface latérale munie d'un baffle (16), la géométrie interne de l'enceinte (3) et de la tête (5) étant telles que des gouttelettes portées par les flux de vapeurs issus du réservoir viennent impacter sur ledit baffle (16) avant que ces flux ne franchissent l'orifice de ventilation (14), ce clapet étant **caractérisé en ce que** le corps du flotteur (4) comprend une gorge (15) dans sa surface latérale, la partie supérieure de cette gorge jouant le rôle de baffle (16) d'impact et la partie inférieure (17), celui de surface de drainage.

2. Clapet selon la revendication précédente, dans lequel le baffle (16) est situé au dessus d'un point où les flux de vapeurs changent de direction pour attaquer une course finale vers l'orifice de ventilation (14).

3. Clapet selon la revendication précédente, **caractérisé en ce que** l'enceinte (3) comprend un baffle interne (12).

4. Clapet selon la revendication 2, **caractérisé en ce que** les flux de vapeurs entrent dans l'enceinte substantiellement horizontalement à travers les orifices latéraux (11) de celle-ci, puis deviennent verticaux pour atteindre l'orifice de ventilation (14).

5. Clapet selon l'une quelconque des revendications précédentes, dans lequel la gorge (15) a une paroi supérieure (16) substantiellement horizontale et une paroi inférieure (17) substantiellement oblique.

6. Clapet selon l'une quelconque des revendications précédentes, **caractérisé en ce que** la paroi latérale du flotteur située en dessous du baffle d'impact (16) comprend des sillons de drainage (18) verticaux.

7. Clapet selon l'une quelconque des revendications précédentes, **caractérisé en ce qu'**il est équipé d'une bille dense lui conférant une fonction ROV (de Roll Over Valve).

8. Circuit de mise à l'air d'un réservoir à carburant équipé d'un clapet selon l'une quelconque des revendications précédentes.

9. Réservoir à carburant muni d'un circuit de mise à l'air selon la revendication précédente et/ou ayant un orifice de ventilation muni d'un clapet selon l'une quelconque des revendications 1 à 7.
